# EUROPÄISCHE PATENTANMELDUNG

(11) **EP 4 481 910 A1**
(43) Veröffentlichungstag der Anmeldung: **25.12.2024**
(21) Anmeldenummer: 24173819.4
(22) Anmeldetag: 02.05.2024
(51) Int. Cl.: H01M 50/171, H01M 50/184, H01M 50/188, H01M 50/213

(54) **AKKUPACK MIT EINER DICHTUNGSEINHEIT**

(30) Priorität: 20.06.2023 DE 102023205746
(71) Anmelder: Robert Bosch GmbH, 70442 Stuttgart (DE)
(72) Erfinder: Koeder, Thilo, 70839 Gerlingen (DE); Kunert, Peter, 72805 Lichtenstein (DE); Droigk, Thorsten, 72074 Tuebingen (DE); Schmid, Stefan, 71069 Sindelfingen (DE)

(57) **Zusammenfassung**

Die Erfindung betrifft einen Akkupack, insbesondere einen Wechselakkupack, mit einem Gehäuse, wobei das Gehäuse zumindest zwei Gehäuseteile aufweist, mit einer Dichtungseinheit zur Abdichtung des Gehäuses, wobei die Dichtungseinheit zumindest ein Dichtungselement aufweist, das in einem Aufnahmeraum zwischen den Gehäuseteilen aufgenommen ist. Es wird vorgeschlagen, dass das Dichtungselement genau zwei Dichtlippen aufweist.

## Beschreibung

### Stand der Technik

In der DE 10 2021 206 828 A1 ist ein Akkupack mit einem Lippendichtring beschrieben.

### Offenbarung der Erfindung

Die Erfindung betrifft einen Akkupack, insbesondere einen Wechsel akku pack, mit einem Gehäuse, wobei das Gehäuse zumindest zwei Gehäuseteile aufweist, mit einer Dichtungseinheit zur Abdichtung des Gehäuses, wobei die Dichtungseinheit zumindest ein Dichtungselement aufweist, das in einem Aufnahmeraum zwischen den Gehäuseteilen aufgenommen ist. Es wird vorgeschlagen, dass das Dichtungselement genau zwei Dichtlippen aufweist. Vorteilhaft kann durch das Dichtungselement insbesondere bei Gehäuseteilen mit dünnen Wandstärken sichergestellt werden, dass durch das Dichtungselement eine minimierte oder keine wesentliche Verformung der Gehäuseteile auftritt und die Flächenpressung dadurch optimiert wird.

Der Akkupack ist insbesondere Teil eines Systems, welches sich aus dem Akkupack und einem Verbraucher zusammensetzt, wobei der Verbraucher während des Betriebs über den Akkupack mit Energie versorgt wird. Der Akkupack kann beispielsweise als ein Handwerkzeugmaschinenakkupack oder als ein Elektrofahrradakkupack ausgebildet sein. Der Akkupack ist insbesondere als ein Wechselakkupack ausgebildet, der bevorzugt werkzeuglos lösbar mit dem Verbraucher ausgebildet ist. Alternativ ist ebenso denkbar, dass der Akkupack fest im Gehäuse des Verbrauchers angebracht beziehungsweise integriert ist. Unter einer werkzeuglosen Trennung soll dabei auch eine Trennung über ein Schloss, beispielsweise ein Fahrradschloss, verstanden werden. Das Schloss kann dabei beispielsweise über einen Schlüssel oder einen elektrischen Aktuator betätigbar ausgebildet sein. Der Akkupack ist insbesondere verbindbar mit einer Ladevorrichtung zum Aufladen des Akkupacks ausgebildet. Alternativ oder zusätzlich kann der Akkupack auch derart ausgebildet sein, dass er im mit dem Verbraucher verbundenen Zustand aufladbar ist.

Der Verbraucher kann insbesondere als ein Gartengerät, wie beispielsweise ein Rasenmäher oder eine Heckenschere, als ein Haushaltsgerät, wie beispielsweise ein elektrischer Fensterreiniger oder Handstaubsauger, als eine Handwerkzeugmaschine, wie beispielsweise ein Winkelschleifer, ein Schrauber, eine Bohrmaschine, ein Bohrhammer, etc., als ein elektrisches Fortbewegungsmittel, wie beispielsweise ein Elektrofahrrad in Form eines Pedelecs oder eines E-Bikes, als ein eScooter oder als ein Messwerkzeug, wie beispielsweise ein Laserentfernungsmessgerät, ausgebildet sein. Des Weiteren ist auch denkbar, dass der Verbraucher als ein anderes insbesondere tragbares Gerät ausgebildet ist, wie beispielsweise eine Baustellenbeleuchtung, ein Absauggerät oder ein Baustellenradio.

In dem Gehäuse des Akkupacks ist zumindest eine Akkuzelle angeordnet. Das Gehäuse des Akkupacks ist vorzugsweise als ein Außengehäuse ausgebildet. Der Akkupack, insbesondere das Gehäuse des Akkupacks, kann über eine mechanische Schnittstelle lösbar mit dem Verbraucher und/oder einer Ladevorrichtung verbindbar oder fest verbunden ausgebildet sein. Das Gehäuse weist vorzugsweise zumindest ein Gehäuseteil auf, das als ein Außengehäuseteil ausgebildet ist. Das Außengehäuseteil grenzt dabei den Akkupack nach außen ab und kann von einem Benutzer berührt werden. Zudem kann das Gehäuse zumindest ein Innengehäuseteil aufweisen, dass vollständig von dem zumindest einen Gehäuseteil umschlossen wird. Die zwei Gehäuseteile sind vorzugsweise kraft- und/oder formschlüssig miteinander verbunden. Dies kann beispielhaft über eine Schraubverbindung, eine Klippsverbindung oder eine andere dem Fachmann bekannt Verbindungsart erfolgen.

Der Akkupack weist zur Aufnahme der Akkuzellen vorzugsweise einen Zellenhalter auf. Der Zellenhalter des Akkupacks ist insbesondere als ein Gehäuseteil ausgebildet, vorzugsweise als ein Innengehäuseteil. Es ist allerdings ebenso denkbar, dass der Zellenhalter teilweise oder vollständig als ein Außengehäuseteil ausgebildet ist. Das Gehäuse des Akkupacks kann einen oder mehrere Zellenhalter aufweisen. Die Gehäuseteile, insbesondere die Zellenhalter, sind miteinander kraft-, form- und/oder stoffschlüssig verbunden. Der Zellenhalter kann auch hülsenförmige Einsätze aufweisen, die wiederum der Schutzeinheit zugeordnet sind und zumindest ein Verstärkungselement und/oder ein Schwächungselement aufweisen. Der Zellenhalter ist vorzugsweise aus einem Kunststoff, insbesondere einem thermoplastischen Kunststoff, ausgebildet. Der Zellenhalter ist bevorzugt aus einem temperaturbeständigen Kunststoff, bevorzugt aus einem faserverstärkten Kunststoff, ausgebildet. Alternativ ist ebenso denkbar, dass der Zellenhalter aus einem metallischen Werkstoff ausgebildet ist. Der Zellenhalter ist insbesondere einteilig oder einstückig ausgebildet. Es sind auch noch weitere Werkstoffe, zum Beispiel Keramik denkbar. Unter einstückig soll im Zusammenhang dieser Anmeldung insbesondere ein Bauteil verstanden werden, welches aus einem Stück ausgebildet und nicht aus mehreren Bauteilen, die stoffschlüssig und/oder kraft- und/oder formschlüssig miteinander verbunden sind, ausgebildet ist. Ein einstückiges Bauteil besteht demnach aus einem einzigen Material. Unter einteilig soll im Zusammenhang dieser Anmeldung mehrere Bauteile, die stoffschlüssig, beispielsweise über ein 2 K Spritzguss oder einen Stoffschluss, miteinander verbunden sind, verstanden werden. Eine einteilige Komponente kann somit aus einem oder mehreren Materialien bestehen. Alternativ ist auch denkbar, dass der Zellenhalter mehrteilig ausgebildet ist, wobei die unterschiedlichen Teile kraft- und/oder formschlüssig miteinander verbunden sind. Der Ackupack kann einen oder mehrere Zellenhalter, die nebeneinander und/oder hintereinander angeordnet sind, aufweisen.

Über eine mechanische Schnittstelle ist der Akkupack kraft- und/oder formschlüssig mit dem Verbraucher verbindbar. Vorteilhaft umfasst die mechanische Schnittstelle zumindest ein Betätigungselement, über das die Verbindung des Akkupacks mit dem Verbraucher und/oder mit der Ladevorrichtung lösbar ist. Das Betätigungselement kann beispielsweise als ein Schloss, ein Knopf, ein Hebel oder als ein Taster ausgebildet sein. Das Betätigungselement kann am Akkupack oder am Verbraucher angeordnet sein. Zudem kann die mechanische Schnittstelle Führungselemente zur Führung des Akkupacks beim Verbindungsprozess und/oder Zentrierelemente zur Zentrierung des Akkupacks beim Verbindungsprozess umfassen.

Zudem weist der Akkupack zumindest eine elektrische Schnittstelle auf, über die der Akkupack mit dem Verbraucher und/oder mit der Ladevorrichtung elektrisch verbindbar ist. Über die elektrische Verbindung kann der Akkupack beispielsweise geladen und/oder entladen werden. Alternativ oder zusätzlich ist auch denkbar, dass über die elektrische Schnittstelle Informationen von dem Akkupack an den Verbraucher und umgekehrt übermittelbar sind. Die elektrische Schnittstelle ist bevorzugt als eine Kontaktschnittstelle ausgebildet, bei der die elektrische Verbindung über einen physischen Kontakt zumindest zweier leitfähiger Bauteile erfolgt. Die elektrische Schnittstelle umfasst bevorzugt zumindest zwei elektrische Kontaktelemente. Insbesondere ist einer der elektrischen Kontaktelemente als ein Plus-Kontakt und das andere elektrische Kontaktelement als ein Minus-Kontakt ausgebildet. Zusätzlich kann die elektrische Schnittstelle zumindest einen Zusatzkontakt aufweisen, der dazu ausgebildet ist, zusätzliche Informationen an den Verbraucher und/oder an die Ladevorrichtung zu übertragen. Die Zusatzkontakte können als Signalkontakte, Codierkontakte, Temperaturkontakte, Bus-Kontakte etc. ausgebildet sein. Die elektrischen Kontaktelemente können beispielsweise als federnde Kontaktelemente in Form von Kontakttulpen oder als Flachkontakte in Form von Kontaktklingen ausgebildet sein. Alternativ oder zusätzlich kann die elektrische Schnittstelle ein sekundäres Ladespulenelement zur induktiven Ladung aufweisen. Die mechanische Schnittstelle und die elektrische Schnittstelle können dabei integriert oder getrennt voneinander ausgebildet sein.

Des Weiteren umfasst der Akkupack vorzugsweise eine Elektronik. Die Elektronik kann beispielsweise eine Leiterplatte, eine Recheneinheit, eine Steuereinheit, einen Transistor, einen Kondensator, und/oder eine Speichereinheit aufweisen. Zusätzlich oder alternativ ist ebenfalls denkbar, dass Informationen von der Elektronik ermittelt werden. Die Elektronik ist zur Steuerung oder Regelung des Akkupacks und/oder des Verbrauchers ausgebildet. Die Elektronik umfasst insbesondere ein BMS (engl. Battery Management System), das zur Überwachung des Akkupacks ausgebildet ist. Das BMS ist insbesondere dazu ausgebildet, eine Überladung und/oder eine Tiefenentladung des Akkupacks zu verhindern. Vorzugsweise ist das BMS zur korrekten Zellsymmetrierung ausgebildet. Die Elektronik kann zudem ein oder mehrere Sensorelemente aufweisen, beispielsweise einen Temperatursensor zur Ermittlung der Temperatur innerhalb des Ackupacks oder einen Bewegungssensor zur Ermittlung von Bewegungen. Die Elektronik kann alternativ oder zusätzlich ein Kodierungselement, wie beispielsweise ein Kodierungswiderstand, aufweisen. Die elektrischen Kontaktelemente der elektrischen Schnittstelle des Akkupacks können auf der Leiterplatte der Elektronik angeordnet oder mit der Leiterplatte verbunden sein. Unter einer Leiterplatte soll im Zusammenhang dieser Anmeldung ein Schaltungsträger verstanden werden, der ein organisches oder anorganisches Substrat, beispielsweise IMS, aufweist. Die Leiterplatte kann als eine starre Leiterplatte oder als eine flexible Leiterplatte ausgebildet sein. Zudem kann es sich bei der Leiterplatte um eine bestückte oder eine unbestückte Leiterplatte handeln. Die Leiterplatte kann eine einzelne Lage aufweisen oder mehrlagig ausgebildet sein.

Die Akkuzelle kann als eine galvanische Zelle ausgebildet sein, die einen Aufbau aufweist, bei dem ein Zellpol an einem Ende und ein weiterer Zellpol an einem gegenüberliegenden Ende zu liegen kommen. Insbesondere weist die Akkuzelle an einem Ende einen positiven Zellpol und an einem gegenüberliegenden Ende einen negativen Zellpol auf. Bevorzugt sind die Akkuzellen als NiCd- oder NiMh-, besonders bevorzugt als lithiumbasierte Akkuzellen bzw. Li-lon Akkuzellen, ausgebildet. Alternativ ist beispielhaft auch denkbar, dass die Akkuzelle als eine Pouchzelle oder als eine prismatische Zelle ausgebildet ist. Die Akkuspannung des Akkupacks ist in der Regel ein Vielfaches der Spannung einer einzelnen Akkuzelle und ergibt sich aus der Schaltung (parallel oder seriell) der Akkuzellen. Bei gängigen Akkuzellen mit einer Spannung von 3,6 V ergeben sich somit beispielhafte Akkuspannung von 3,6 V, 7,2 V, 10, 8 V, 14,4 V, 18 V, 36 V, 54 V, 108 V etc. Bevorzugt ist die Akkuzelle als zumindest im Wesentlichen zylinderförmige Rundzelle ausgebildet, wobei die Zellpole an Enden der Zylinderform angeordnet sind.

Das Dichtungselement ist insbesondere aus einem Kunststoff, vorzugsweise aus einem elastischen Kunststoff, ausgebildet. Das Dichtungselement ist insbesondere derart elastisch ausgebildet, dass das Dichtungselement, insbesondere die Dichtungslippen, im montierten Zustand verformt und/oder gestaucht ausgebildet sind. Insbesondere weist die Dichtungseinheit zwischen jeweils zwei Gehäuseteilen ein einziges Dichtungselement auf. Vorzugsweise ist das Dichtungselement aus einem Gummi ausgebildet. Das Dichtungselement ist bevorzugt einstückig ausgebildet. Das Dichtungselement ist im montierten Zustand insbesondere derart im Aufnahmeraum angeordnet und verpresst, dass durch den Aufnahmeraum keine Feuchtigkeit oder Spritzwasser in das Innere des Akkupacks eintreten kann. Das Dichtungselement kann als ein Dichtring ausgebildet sein.

Die Dichtlippen erstrecken sich vorzugsweise im Wesentlichen parallel zueinander. Die Dichtlippen sind an einem Grundkörper angeordnet, der sich im Wesentlichen entlang einer Fügefläche zwischen den Gehäuseteilen erstreckt. Die Dichtlippen sind vorzugsweise aus dem gleichen Material ausgebildet.

Des Weiteren wird vorgeschlagen, dass das Dichtungselement radial zwischen dem ersten Gehäuseteil und dem zweiten Gehäuseteil angeordnet ist. Vorteilhaft kann dadurch eine optimale Dichtwirkung sichergestellt werden.

Weiterhin wird vorgeschlagen, dass das erste Gehäuseteile als eine Endkappe und das zweite Gehäuseteil als ein insbesondere rohrförmiger Grundkörper ausgebildet ist. Die Endkappe schließt dabei insbesondere den Grundkörper auf einer Seite im Wesentlichen ab.

Zudem wird vorgeschlagen, dass die zweite Dichtlippe eine geringere Höhe als die erste Dichtlippe aufweist. Vorteilhaft kann dadurch der Druck auf das Gehäuse durch die Dichtungseinheit reduziert werden. Die zweite Dichtlippe weist eine Höhe auf, die insbesondere in einem Bereich zwischen 50% und 99% der Höhe der ersten Dichtlippe, vorzugsweise in einem Bereich zwischen 75% und 95% der Höhe der ersten Dichtlippe, liegt. Bevorzugt ist die Höhe der zweiten Dichtlippe um wenige Zehntel mm, beispielsweise um 0,2 bis 0,3 mm, kleiner als die Höhe der ersten Dichtlippe.

Des Weiteren wird vorgeschlagen, dass die zweite Dichtlippe eine geringere Breite als die erste Dichtlippe aufweist. Vorteilhaft kann dadurch der Druck auf das Gehäuse weiter optimiert werden. Bei der Breite kann es sich dabei um eine Breite der jeweiligen Dichtlippe an der Wurzel, beispielsweise am Grundkörper des Dichtungselements, handeln. Alternativ kann es sich bei der Breite auch um eine Halbwertsbreite der Dichtlippe in der Mitte der jeweiligen Dichtlippe handeln. Insbesondere weist die zweite Dichtlippe eine um zumindest 5%, vorzugsweise zumindest 10%, bevorzugt um zumindest 25%, verringerte Breite auf.

Weiterhin wird vorgeschlagen, dass ein Abstand zwischen der ersten Dichtlippe und der zweiten Dichtlippe kleiner als eine Breite der ersten Dichtlippe ausgebildet ist. Vorteilhaft kann dadurch der auf das Gehäuse ausgeübte Druck weiter optimiert werden. Insbesondere ist der Abstand derart ausgebildet, dass die Dichtlippen im montierten Zustand stets voneinander beabstandet sein, auch wenn diese umgebogen werden.

Zudem wird vorgeschlagen, dass der Aufnahmeraum im Bereich des Dichtungselements insbesondere im Bereich der ersten Dichtlippe, eine konstante Größe aufweist.

Insbesondere ist das Dichtungselement, vorzugsweise die erste Dichtlippe, bereichsweise vergrößert. Vorteilhaft kann dadurch der Anpressdruck des Dichtungselements auf das Gehäuse optimal angepasst werden.

Des Weiteren wird vorgeschlagen, dass die Vergrößerung in einem Bereich zwischen 5% und 50%, vorzugsweise in einem Bereich zwischen 10% und 20%, ausgebildet ist. Vorteilhaft kann dadurch das Dichtungselement weiter optimiert werden.

Weiterhin wird vorgeschlagen, dass die zweite Dichtlippe in ihrer Größe variiert. Vorteilhaft kann dadurch das Dichtungselement weiter optimiert werden. Alternativ ist ebenso denkbar, dass die zweite Dichtlippe in ihrer Größe konstant ausgebildet ist.

Zudem wird vorgeschlagen, dass das Dichtungselement ein Verbindungselement zur kraft- und/oder formschlüssigen Verbindung des Dichtungselements mit dem ersten Gehäuseteil und/oder dem zweiten Gehäuseteil aufweist. Vorteilhaft kann dadurch die Montage und Positionierung des Dichtungselements verbessert werden. Das Gehäuse des Akkupacks weist vorzugsweise zumindest ein korrespondierendes Verbindungselement auf. Das Verbindungselement und das Dichtungselement sind bevorzugt einstückig ausgebildet.

Des Weiteren wird vorgeschlagen, dass das zweite Gehäuseteil aus einem metallischen Material ausgebildet ist und eine Dicke von kleiner als 1,1 mm, vorzugsweise kleiner als 0,8 mm, aufweist. Vorteilhaft kann dadurch ein besonders kompakter Akkupack bereitgestellt werden.

Weiterhin wird vorgeschlagen, dass das zweite Gehäuseteil aus einem Kunststoff ausgebildet ist und eine Dicke von unter 2,0 mm, vorzugsweise unter 1,5 mm, aufweist. Vorteilhaft kann dadurch ein besonders leichter Akkupack bereitgestellt werden.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Elektrofahrrads mit einem erfindungsgemäßen Akkupack;
- Fig. 2: eine perspektivische Ansicht des Akkupacks;
- Fig. 3: einen Querschnitt durch ein Gehäuseteil des Akkupacks;
- Fig. 4: einen Schnitt durch ein Dichtungselement des Akkupacks;
- Fig. 5: eine Draufsicht auf das Dichtungselement des Akkupacks gemäß Fig. 4.

### Beschreibung der Ausführungsbeispiele

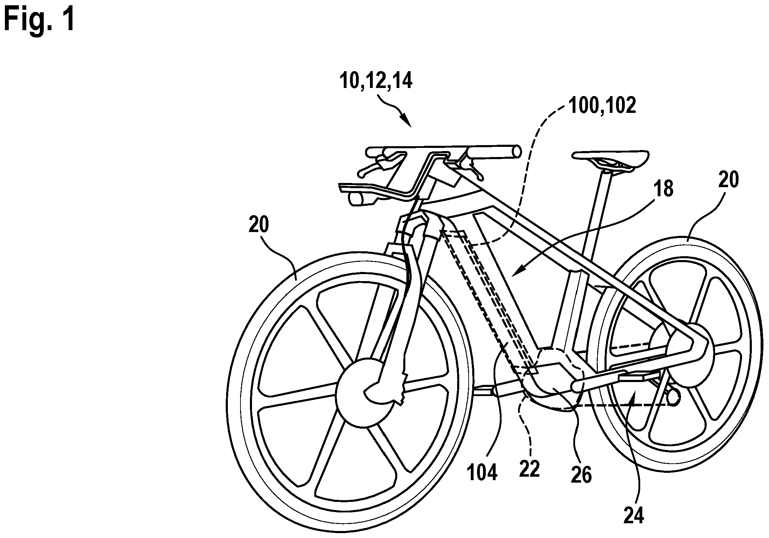

In Figur 1 ist ein Verbraucher 10 mit einem Akkupack 100 in einer perspektivischen Seitenansicht gezeigt. Der Verbraucher 10 ist beispielhaft als ein elektrisch angetriebenes Fortbewegungsmittel 12, insbesondere als ein Elektrofahrrad 14, ausgebildet. Das Elektrofahrrad 14 kann beispielsweise als ein Pedelec oder als ein E-Bike ausgebildet sein.

Das Elektrofahrrad 14 weist einen Rahmen 18 bzw. einen Fahrradrahmen auf. Mit dem Rahmen 18 sind zwei Räder 20 verbunden. Zudem weist der Verbraucher 10 eine Antriebseinheit 22 auf, die einen Elektromotor umfasst. Der Elektromotor ist vorzugsweise als ein Permanentmagnet-erregter, bürstenloser Gleichstrommotor ausgebildet. Der Elektromotor ist beispielhaft als ein Mittelmotor ausgebildet, wobei auch ein Nabenmotor oder dergleichen denkbar ist.

Die Antriebseinheit 22 umfasst eine Steuereinheit (nicht dargestellt), die zur Steuerung oder Regelung des Elektrofahrrads 14, insbesondere des Elektromotors, ausgebildet ist. Das Elektrofahrrad 14 weist eine Tretkurbel 24 auf. Die Tretkurbel 24 ist mit einer Tretkurbelwelle (nicht dargestellt) verbunden.

Die Steuereinheit und die Antriebseinheit 22 mit dem Elektromotor und der Tretkurbelwelle sind in einem mit dem Rahmen verbundenen Antriebsgehäuse 26 angeordnet. Die Antriebsbewegung des Elektromotors wird vorzugsweise über ein Getriebe (nicht dargestellt) auf die Tretkurbelwelle übertragen, wobei die Größe der Unterstützung durch die Antriebseinheit 22 mittels der Steuereinheit gesteuert oder geregelt wird.

Der Verbraucher 10 ist mit dem Akkupack 100, der zur Energieversorgung der Antriebseinheit 22 ausgebildet ist, elektrisch und mechanisch verbunden. Der Ackupack 100 ist beispielhaft als ein Wechselakkupack 102 ausgebildet. Der Akkupack 100 ist beispielhaft im verbundenen Zustand vollständig im Rahmen 18 des Elektrofahrrads 14 aufgenommen. Die Verbindung kann dabei über ein axiales Einschieben des Akkupacks 100 in das Unterrohr des Rahmens 18 oder durch ein seitliches Einschwenken des Akkupacks 100 in den Rahmen 18 erfolgen. Alternativ ist ebenso denkbar, dass der Akkupack 100 derart ausgebildet ist, dass der Akkupack 100 an einer Außenseite des Rahmens 18 befestigbar ist.

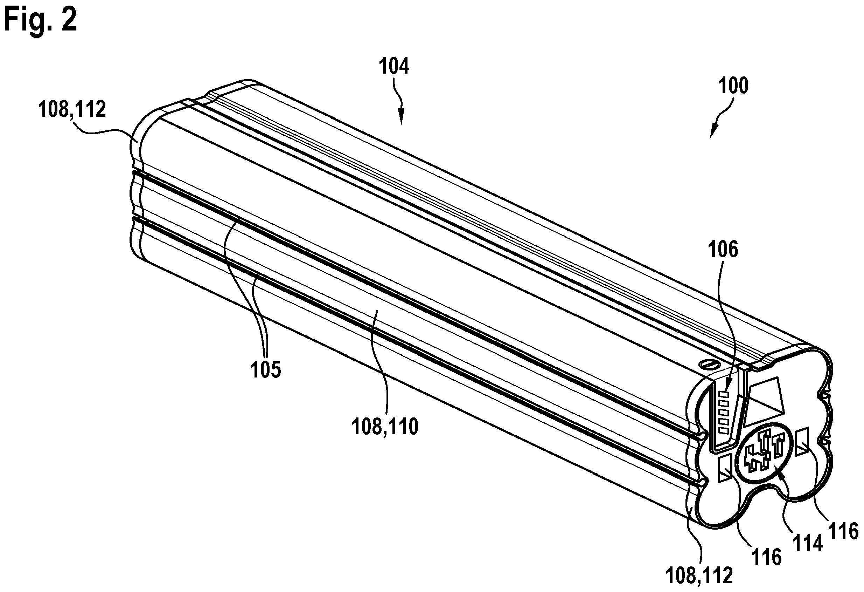

In Figur 2 ist eine perspektivische Ansicht des Akkupacks 100 gezeigt. Der Akkupack 100 weist ein Gehäuse 104 auf, das als ein Außengehäuse ausgebildet ist. Das Gehäuse 104 des Akkupacks 100 ist beispielhaft derart ausgebildet, dass es im mit dem Rahmen 18 des Elektrofahrrads 14 verbundenen Zustand ebenfalls den Rahmen 18 teilweise nach außen abschließt. Dies erfolgt über eine in Figur 2 nicht gezeigte Blende, die mit dem Gehäuse 104 beispielhaft über die Längsnuten 105 verbindbar ist.

Der Akkupack 100 weist eine Ladezustandsanzeige 106 auf, die am Gehäuse 104 des Akkupacks 100 angeordnet und zur Anzeige des Ladezustands des Ackupacks 100 ausgebildet ist. Die Ladezustandsanzeige 106 ist dabei mit einer Elektronik (nicht dargestellt) des Akkupacks verbunden. Die Elektronik ist im Gehäuse 104 des Akkupacks 100 angeordnet und umfasst beispielhaft ein Batteriemanagementsystem.

Das Gehäuse 104 umfasst ein Gehäuseteil 108, das beispielhaft in Form eines rohrförmigen Grundkörpers 110 ausgebildet ist und sich im Wesentlichen über die gesamte Länge des Akkupacks 100 erstreckt.

Zudem weist das Gehäuse 104 des Akkupacks 100 zwei weitere Gehäuseteile 108 beispielhaft in Form von Verbindungsplatten 112 auf. Die Verbindungsplatten 112 sind beispielhaft aus einem Kunststoff, insbesondere einer Hartplastik ausgebildet. Die Verbindungsplatten 112 sind beispielhaft mit dem rohrförmigen Grundkörper 110 des Akkupacks 100 kraft- und/oder formschlüssig verbunden, insbesondere verschraubt. Die Verbindungsplatten 112 bilden dabei Endkappen, die den Grundkörper 110 stirnseitig abschließen.

Die erste Verbindungsplatte 112 umfasst dabei eine Verriegelungseinheit (nicht dargestellt), die mit einer korrespondierenden Verriegelungseinheit (nicht dargestellt) des Elektrofahrrads 14 verbindbar ist. Die zweite Verbindungsplatte 112 umfasst eine elektrische Schnittstelle 114 mit einer Buchse zur elektrischen Verbindung des Akkupacks 100 mit dem Elektrofahrrad 14. Zudem umfasst die zweite Verbindungsplatte 112 beispielhaft drei Verbindungs- und/oder Zentrierelemente 116 zur Verbindung des Akkupacks 100 mit dem Elektrofahrrad 14.

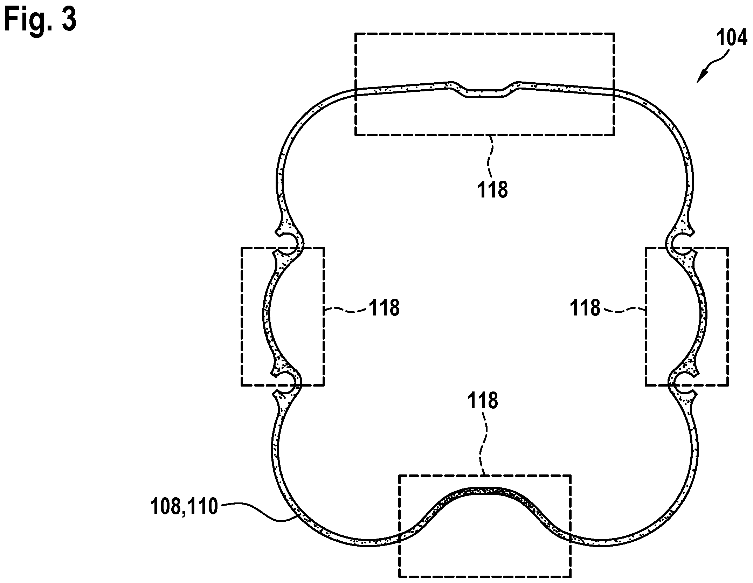

In Figur 3 ist ein Querschnitt durch das Gehäuse 104, insbesondere durch den Grundkörper 110, gezeigt. Der Grundkörper 110 ist beispielhaft aus einem metallischen Werkstoff, insbesondere Aluminium, ausgebildet. Der Grundkörper 110 weist dabei eine Dicke im Bereich zwischen 0,8 mm und 1,1 mm, beispielhaft 1,1 mm, auf. Aufgrund der dünnen Wandung wird die Steifigkeit des Gehäuses 104, insbesondere des Gehäuseteils 108 in Form des Grundkörpers 110, reduziert.

Durch die reduzierte Steifigkeit weist das Gehäuseteil 108 beispielhaft vier Bereich 118 auf, in denen im montierten Zustand eine erhöhte Verformung erfolgt.

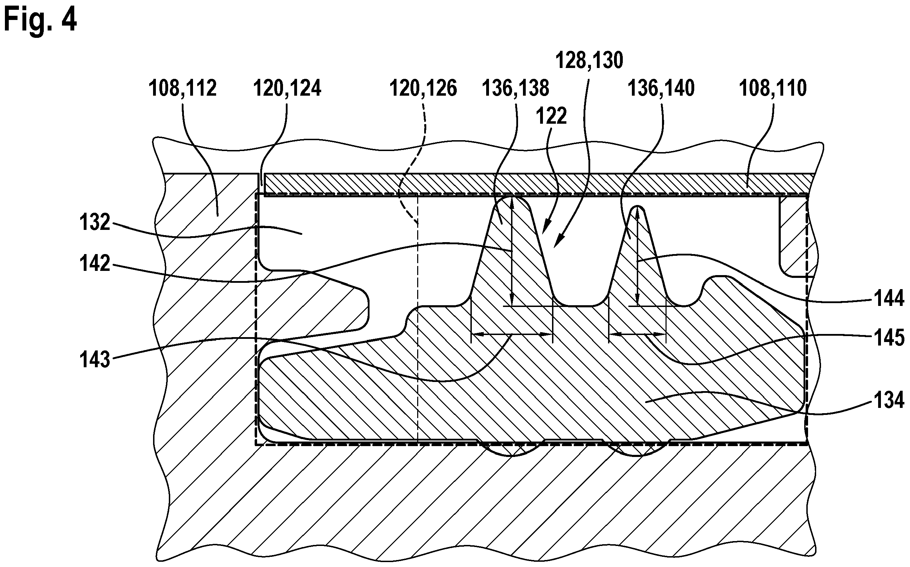

In Figur 4 ist ein Schnitt durch die zwei Gehäuseteile 108 in Form des Grundkörpers 110 und einer der Verbindungsplatten 112 gezeigt. Durch die Verbindung der Gehäuseteile 108 entstehen Spalte 120, die über eine Dichtungseinheit 122 abgedichtet sind. Durch die Geometrie der Gehäuseteile 108 entsteht beispielhaft ein axialer Spalt 124 und ein radialer Spalt 126.

Die Dichtungseinheit 122 weist ein Dichtungselement 128 auf, das zur Abdichtung des Spalts 120, insbesondere zur Abdichtung des radialen Spalts 126, ausgebildet ist. Das Dichtungselement 128 ist beispielhaft als ein Dichtring 130 ausgebildet. Das Dichtungselement 128 ist beispielhaft im Wesentlichen vollständig in einem Aufnahmeraum 132 des Gehäuses 104 zwischen den beiden Gehäuseteilen 108 angeordnet. In der gezeigten Ausführungsform ist das Dichtungselement 128 zur radialen Abdichtung ausgebildet, wobei alternativ oder zusätzlich denkbar ist, dass das Dichtungselement oder ein weiteres Dichtungselement zur axialen Abdichtung ausgebildet ist.

Das Dichtungselement 128 weist einen im Wesentlichen ringförmigen Grundkörper 134 auf. Der Grundkörper 134 erstreckt sich dabei entlang des gesamten radialen Spalts 126.

Zudem weist das Dichtungselement 128 genau zwei Dichtlippen 136 auf. Die Dichtlippen 136 erstrecken sich ausgehend von dem Grundkörper 134 des Dichtungselements 128 in insbesondere radialer Richtung. Die Dichtlippen 136 erstrecken sich beispielhaft durchgehend entlang des gesamten Umfangs des Dichtungselements 128.

Die erste Dichtlippe 138 ist als eine Primärlippe ausgebildet, wobei von außen durch den Spalt 120 eindringendes Wasser zunächst die erste Dichtlippe 138 beziehungsweise die Primärlippe beaufschlagt. Die zweite Dichtlippe 140 ist als eine Sekundärlippe ausgebildet, wobei von außen durch den Spalt 120 eindringendes Wasser zunächst an der Primärlippe vorbeigeführt werden muss, bevor diese auf die Sekundärlippe trifft. Durch die nachgeordnete Anordnung der Sekundärlippe ist diese geringeren Beanspruchungen als die Primärlippe ausgesetzt. Alternativ ist ebenso denkbar, dass das Dichtungselement 128 zumindest zwei zweite Dichtlippen 140 oder zumindest zwei Sekundärlippen aufweist. Im montierten Zustand ist die erste Dichtlippe 138 gestaucht ausgebildet. Beispielhaft ist die zweite Dichtlippe 140 im montierten Zustand nicht gestaucht ausgebildet, wobei ebenso denkbar ist, dass die zweite Dichtlippe 140 im montierten Zustand ebenso gestaucht ausgebildet ist. Insbesondere ist die Stauchung der ersten Dichtlippe 138 größer als die Stauchung der zweiten Dichtlippe 140.

Die erste Dichtlippe 138 weist eine erste Höhe 142 und eine erste Breite 143 auf, die sich von einer zweiten Höhe 144 und einer zweiten Breite 145 der zweiten Dichtlippe 140 unterscheiden. Die erste Höhe 142 der ersten Dichtlippe 138 ist beispielhaft um ca. 10% größer als die zweite Höhe 144 der zweiten Dichtlippe 140. Zudem ist die erste Breite 143 der ersten Dichtlippe 138 um ca. 30% größer als die zweite Breite 145 der zweiten Dichtlippe 140. Die Werte beziehen sich dabei auf den ungestauchten Zustand, wobei die Höhe durch die Stauchung verkleinert und die Breite durch die Stauchung vergrößert wird.

Der Aufnahmeraum 132 weist im Bereich der Dichtlippen 138, 140 insbesondere im Wesentlichen eine gleiche Höhe auf, sodass im Bereich der zweiten Dichtlippe 140 im montierten Zustand die durch das Gehäuse 104 ausgeübte Kraft auf die zweite Dichtlippe 140 stets kleiner als die Kraft auf die erste Dichtlippe 138 ausgebildet ist.

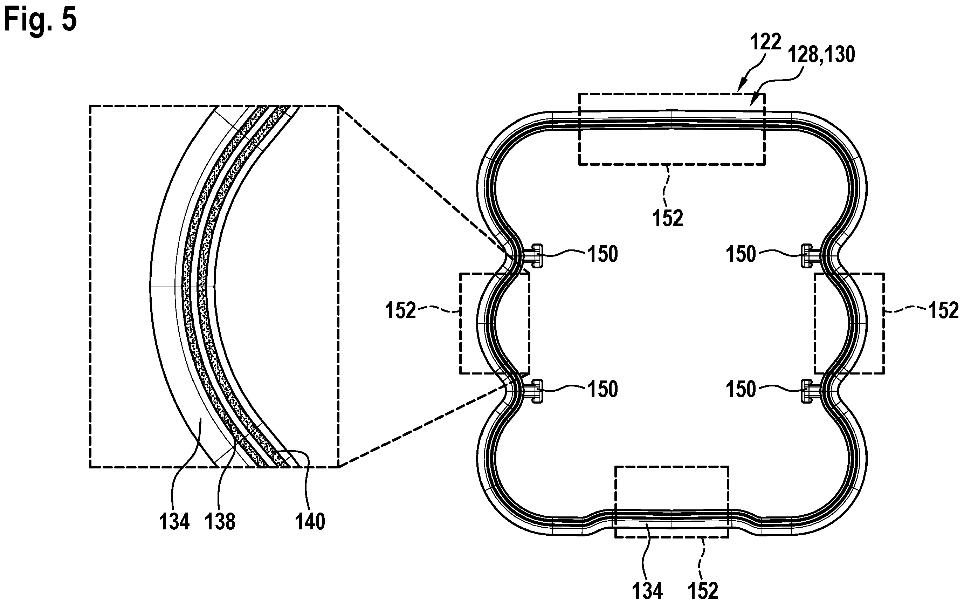

In Figur 5 ist eine Draufsicht auf das Dichtungselement 128 gezeigt. Das Dichtungselement 128, insbesondere der Grundkörper 134 des Dichtungselements 128, erstreckt sich dabei im Wesentlichen korrespondierend zu dem in Figur 3 gezeigten Querschnitt des Grundkörpers 110 des Gehäuses 104 des Akkupacks 100.

Die Größe, insbesondere die erste Höhe 142, der ersten Dichtlippe 138 ist variierend ausgebildet. Das Dichtungselement 128 weist Verbindungselemente 150 auf, die zu nicht dargestellten Verbindungselementen des Gehäuses 104 des Ackupacks 100 korrespondieren und das Dichtungselement 128 bei der Montage an zumindest einem Gehäuseteil 108 halten. Beispielhaft weist das Dichtungselement 128 vier Verbindungselemente 150 auf, die T-förmig ausgebildet sind und sich ausgehend von dem Grundkörper 134 des Dichtungselements 128 senkrecht zu den Dichtlippen 138, 140 nach innen erstrecken.

Korrespondierend zu den Bereichen 118 des Gehäuses 104, in welchen eine erhöhte Verformung des Gehäuses 104 auftritt, weist das Dichtungselement 128 Bereiche 152 mit einer erhöhten Größe, insbesondere einer erhöhten Höhe, auf. Die Vergrößerung ist dabei beispielhaft maximal 20% mittig im den jeweiligen Bereichen 152 des Dichtungselements 128.

Die Dichtungseinheit 124 weist ein zweites Dichtungselement (nicht dargestellt) auf, welches das Gehäuse 104 im Bereich der anderen Verbindungsplatte abdichtet.

## Patentansprüche

1. Akkupack, insbesondere Wechselakkupack, mit einem Gehäuse (104), wobei das Gehäuse (104) zumindest zwei Gehäuseteile (108) aufweist, mit einer Dichtungseinheit (122) zur Abdichtung des Gehäuses (104), wobei die Dichtungseinheit (122) zumindest ein Dichtungselement (128) aufweist, das in einem Aufnahmeraum (132) zwischen den Gehäuseteilen (108) aufgenommen ist,
**dadurch gekennzeichnet, dass**
das Dichtungselement (128) genau zwei Dichtlippen (138, 140) aufweist.

2. Akkupack nach Anspruch 1, **dadurch gekennzeichnet, dass** das Dichtungselement (128) radial zwischen dem ersten Gehäuseteil (108) und dem zweiten Gehäuseteil (108) angeordnet ist.

3. Akkupack nach Anspruch 2, **dadurch gekennzeichnet, dass** das erste Gehäuseteile (108) als eine Verbindungsplatte (112) und das zweite Gehäuseteil (108) als ein insbesondere rohrförmiger Grundkörper (110) ausgebildet ist.

4. Akkupack nach einem der vorhergehenden Ansprüche, **dadurch gekennzeichnet, dass** die zweite Dichtlippe (140) eine geringere Höhe (144) als die erste Dichtlippe (138) aufweist.

5. Akkupack nach einem der vorhergehenden Ansprüche, **dadurch gekennzeichnet, dass** die zweite Dichtlippe (140) eine geringere Breite (145) als die erste Dichtlippe (138) aufweist.

6. Akkupack nach einem der vorhergehenden Ansprüche, **dadurch gekennzeichnet, dass** ein Abstand zwischen der ersten Dichtlippe (138) und der zweiten Dichtlippe (140) kleiner als eine Breite der ersten Dichtlippe (138) ausgebildet ist.

7. Akkupack nach einem der vorhergehenden Ansprüche, **dadurch gekennzeichnet, dass** der Aufnahmeraum (132) im Bereich des Dichtungselements (128), insbesondere im Bereich der ersten Dichtlippe (138), eine konstante Größe aufweist.

8. Akkupack nach einem der vorhergehenden Ansprüche, **dadurch gekennzeichnet, dass** das Dichtungselement (128), insbesondere die erste Dichtlippe (138), bereichsweise vergrößert ist.

9. Akkupack nach Anspruch 8, **dadurch gekennzeichnet, dass** die Vergrößerung der ersten Dichtlippe (138) in einem Bereich zwischen 5% und 50%, vorzugsweise in einem Bereich zwischen 10% und 20%, ausgebildet ist.

10. Akkupack nach einem der vorhergehenden Ansprüche, **dadurch gekennzeichnet, dass** die zweite Dichtlippe (140) in ihrer Größe variiert.

11. Akkupack nach einem der vorhergehenden Ansprüche, **dadurch gekennzeichnet, dass** das Dichtungselement (128) zumindest ein Verbindungselement (150) zur kraft- und/oder formschlüssigen Verbindung des Dichtungselements (128) mit dem ersten Gehäuseteil (108) und/oder dem zweiten Gehäuseteil (108) aufweist.

12. Akkupack nach einem der vorhergehenden Ansprüche, **dadurch gekennzeichnet, dass** zwischen zwei Gehäuseteilen (108) ein einziges Dichtungselement (128) angeordnet ist.

13. Akkupack nach einem der vorhergehenden Ansprüche, **dadurch gekennzeichnet, dass** das zweite Gehäuseteil (108) aus einem metallischen Material ausgebildet ist und eine Dicke von kleiner als 1,1 mm, vorzugsweise kleiner als 0,8 mm, aufweist.

14. Akkupack nach einem der vorhergehenden Ansprüche, **dadurch gekennzeichnet, dass** das zweite Gehäuseteil (108) aus einem Kunststoff ausgebildet ist und eine Dicke von unter 2,0 mm, vorzugsweise unter 1,5 mm, aufweist.
